# EUROPEAN PATENT SPECIFICATION

(11) **EP 2 756 971 B1**
(45) Date of publication and mention of the grant of the patent: **04.07.2018**
(21) Application number: 12831876.3
(22) Date of filing: 23.04.2012
(51) Int. Cl.: B60G 9/04, C21D 1/09, C21D 1/18, C21D 9/08, F16F 1/14

(54) **HOLLOW MEMBER AND METHOD FOR MANUFACTURING HOLLOW MEMBER**
HOHLKÖRPER UND VERFAHREN ZUR HERSTELLUNG DES HOHLKÖRPERS
ÉLÉMENT CREUX ET PROCÉDÉ DE FABRICATION D'ÉLÉMENT CREUX

(30) Priority: 14.09.2011 JP 2011200297
(43) Date of publication of application: 23.07.2014
(73) Proprietor: Y-TEC CORPORATION, Aki-gun Hiroshima 763-0003 (JP); FUJI GIKEN CO., LTD., Aichi 470-0371 (JP)
(72) Inventor: EDAHIRO, Takeshi, Aki-gun Hiroshima 736-0003 (JP); AKUTAGAWA, Norifumi, Aki-gun Hiroshima 736-0003 (JP); YAMANE, Kyotaro, Aki-gun Hiroshima 736-0003 (JP); HIRAOKA, Teruhisa, Aki-gun Hiroshima 736-0003 (JP); YASUDA, Kazumi, Aki-gun Hiroshima 736-0003 (JP); ANDO, Shigeaki, Toyota-shi Aichi 470-0371 (JP); HASHIMOTO, Masaru, Toyota-shi Aichi 470-0371 (JP); ANDO, Yuichi, Toyota-shi Aichi 470-0371 (JP); TSURUTA, Tetsuya, Toyota-shi Aichi 470-0371 (JP)
(74) Representative: BRP Renaud & Partner mbB Rechtsanwälte Patentanwälte Steuerberater
(86) International application number: PCT/JP2012/002781
(87) International publication number: WO 2013/038580

(56) References cited:
- WO-A1-2010/114173
- JP-A- S58 197 221
- JP-A- 2003 154 415
- JP-A- 2005 232 586
- JP-A- 2007 262 469
- JP-A- 2008 030 513
- JP-A- 2010 242 164
- JP-B2- S6 013 045

## Description

### TECHNICAL FIELD

The present invention relates to hollow members to which torsion is applied, such as a torsion beam used for a suspension of a vehicle, and methods for forming the hollow members.

### BACKGROUND ART

As disclosed in Patent Document 1, for example, a hollow member that is called a torsion beam has been used as a suspension of a vehicle. Wheels of a vehicle are attached to arms which are fixed to both ends of the torsion beam, and torsion is repeatedly applied to the torsion beam due to input from the moving wheels. The torsion beam therefore needs to be highly durable to prevent cracks formed therein by the repeated torsion.

### CITATION LIST

### PATENT DOCUMENT

Patent Document 1: Japanese Unexamined Patent Publication No. 2008-30513

### SUMMARY OF THE INVENTION

### TECHNICAL PROBLEM

The durability of the torsion beam is increased by increasing the thickness of the material forming the torsion beam. However, increasing the thickness of the material means increasing the weight of the torsion beam, and that is not preferable.

The durability may also be increased by quenching the entire torsion beam and increasing the hardness of the torsion beam.

However, quenching the entire torsion beam to obtain sufficient durability may increase the hardness of the torsion beam as a whole and decrease the toughness. Thus, the torsion beam may be easily damaged by impact of collision of an object while the vehicle is moving, for example. In other words, there is a limit to an increase in durability of the torsion beam by quenching the entire torsion beam.

Further, quenching the entire torsion beam requires much energy when heating the torsion beam, and causes thermal distortion. Moreover, quenching the entire torsion beam may not be necessary because cracks are formed in only part of the torsion beam.

The present invention is thus intended to significantly increase the durability of a hollow member to which torsion is repeatedly applied, without increasing the thickness of the hollow member and without quenching the entire hollow member or annealing the hollow member. A tubular body with improved residual stress in the body and its production method are disclosed in JP 2005 232586 A. A conventional torsion beam is disclosed in JP S58 197 221 A

### SOLUTION TO THE PROBLEM

The above objective is achieved by claims 1-4.

### ADVANTAGES OF THE INVENTION

In the first aspect of the present disclosure, a partial heat treatment is performed on the peripheral wall of the torsion beam to make the hardness of an outer portion of the peripheral wall greater than the hardness before heating and greater than the hardness of an inner portion of the peripheral wall, and reduce a tensile residual stress of the inner portion of the peripheral wall. Due to this configuration, the occurrence of cracks, etc., can be reduced even if torsion is repeatedly applied to the torsion beam, and therefore, the torsion beam can have high durability without increasing the thickness of the peripheral wall and without quenching the entire torsion beam. When the thickness of the peripheral wall where the hardness is increased is half or less of a total thickness of the peripheral wall, it is possible to increase durability while ensuring the sufficient toughness of the hollow member.

In the second aspect of the present disclosure, the hardness of the inner portion of the peripheral wall is approximately the same as the hardness of the inner portion before heating. It is thus possible to provide a highly durable torsion beam, while giving appropriate toughness and making the torsion beam strong against impact.

In the third aspect of the present disclosure, it is possible to provide a highly durable torsion beam without increasing the thickness of the peripheral wall and without quenching the entire torsion beam.

In the fourth aspect of the present disclosure, the partial heat treatment is performed by emitting laser light. It is therefore possible to provide a highly durable torsion beam efficiently with less energy.

### BRIEF DESCRIPTION OF THE DRAWINGS

FIG. 1 is an oblique view illustrating part of a torsion beam suspension according to an embodiment.
FIG. 2 is a front view of the torsion beam.
FIG. 3 is a bottom view of the torsion beam.
FIG. 4 is a cross-sectional view taken along the line IV-IV of FIG. 3.
FIG. 5 is a graph showing a relationship between the thickness and the hardness of each plate material.
FIG. 6 is a graph showing a relationship between energy density of laser and durability in the case where the plate thickness is 2.9 mm.
FIG. 7 is equivalent to FIG. 6 in the case where the plate thickness is 2.3 mm.

### DESCRIPTION OF EMBODIMENTS

An embodiment of the present invention will be described in detail below, based on the drawings. The following embodiment is merely a preferred example in nature, and is not intended to limit the scope, applications, and use of the invention.

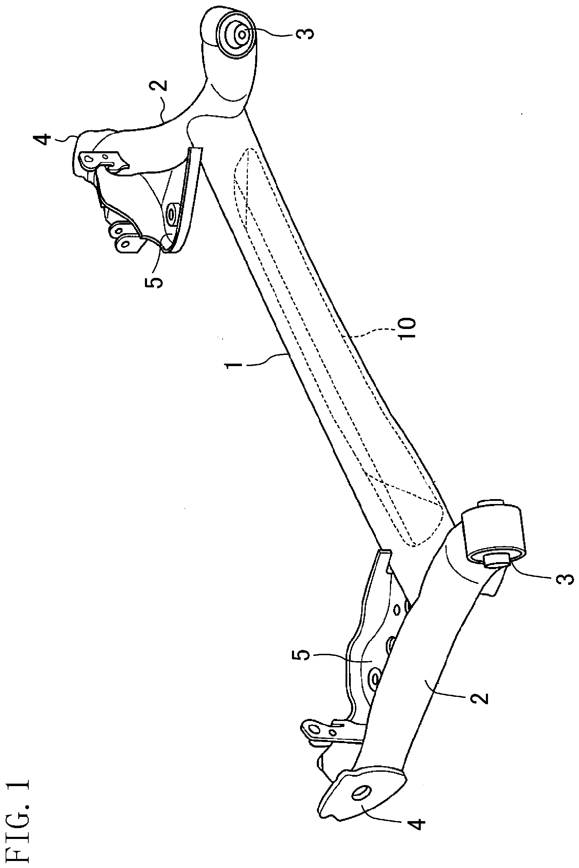

FIG. 1 illustrates part of a torsion beam suspension having a torsion beam 1 according to an embodiment of the present invention. The torsion beam suspension is used for a vehicle's rear-wheel suspension, and includes the torsion beam 1 and arms 2, 2 fixed at both ends of the torsion beam 1 and extending in the vehicle's longitudinal direction. Bushes 3, 3 are provided at the vehicle's front side ends of the arms 2, 2. The arms 2, 2 are attached to the vehicle body via the bushes 3, 3 such that the arms 2, 2 can bounce up and down. On the other hand, wheel support members 4, 4 are provided at the vehicle's rear side ends of the arms 2, 2. The arms 2, 2 are further provided with spring supports 5, 5 for supporting springs (not shown).

The torsion beam 1 is a tubular torsion beam extending in a vehicle width direction. The material of the torsion beam 1 is a carbon steel pipe for general structures. The thickness of the steel pipe is 2.9 mm.

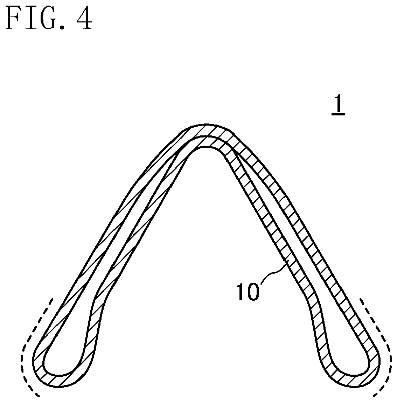

The torsion beam 1 has an approximately circular cross-section at each end side thereof. The entire circumference of the each end side is welded to a corresponding one of the arms 2. A recessed portion 10 which is recessed upwardly from the bottom of the torsion beam 1 is formed in the middle of the torsion beam 1 in its longitudinal direction, and extends continuously in the longitudinal direction. The recessed portion 10 is formed by pushing and deforming a mother pipe with a mold, and has a downwardly open approximately U or approximately V shaped cross-section as shown in FIG. 4.

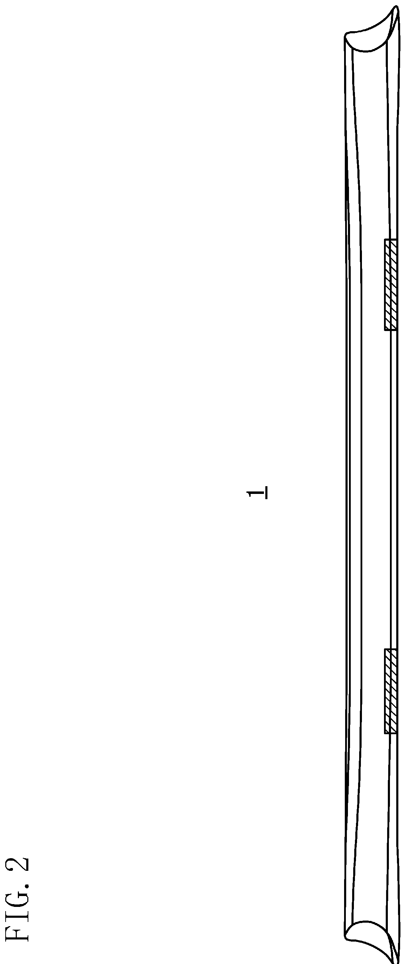

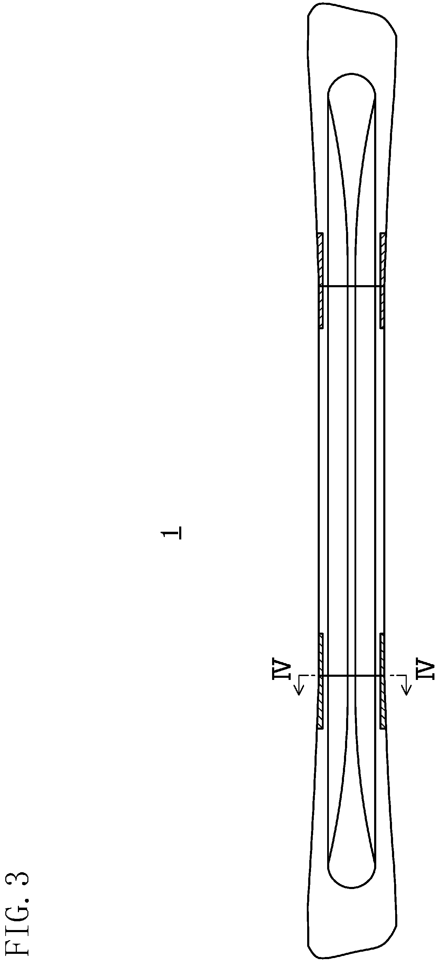

A partial heat treatment is performed on part of the torsion beam 1. The areas where the partial heat treatment has been performed are hatched in FIG. 2 and FIG. 3, and are indicated by dashed line in FIG. 4.

The partial heat treatment is performed by irradiating the areas with predetermined laser light, details of which will be described later. The target areas of the partial heat treatment are areas where cracks are easily formed. That is, in the present embodiment, not the entire torsion beam 1 is quenched, but only part of the torsion beam 1 where cracks are easily formed is subjected to heat treatment.

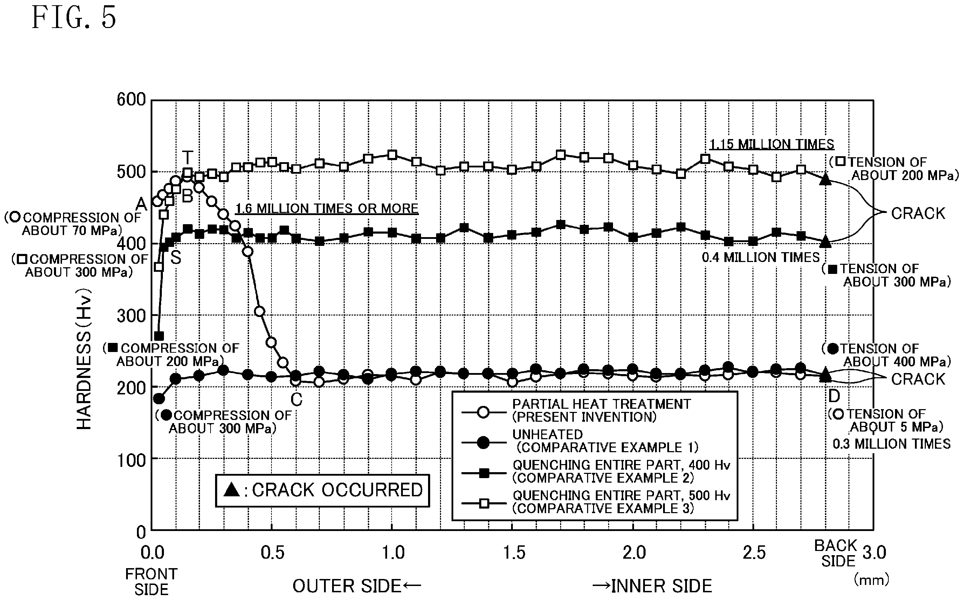

The hardness distributions of the peripheral wall of a member not subjected to heat treatment (i.e., an unheated member) are indicated by black dots in FIG. 5, that is, about 210 to 250 Hv (Vickers hardness) from an outer surface to an inner surface of the peripheral wall. The residual stress of an outer surface portion of the peripheral wall of the unheated member is compression of about 300 MPa. The residual stress of an inner surface portion is tension of about 400 MPa.

The hardness distributions of the peripheral wall of the portion subjected to the partial heat treatment (i.e., a heated portion) are indicated by white circles in FIG. 5, that is, 460 Hv around a portion A in the outer surface of the peripheral wall, and the hardness gradually increases until a portion B, which is 0.15 mm deep from the outer surface, and peaks at the portion B. The hardness at the portion B is about 500 Hv, which is more than twice the hardness of the unheated member. The hardness gradually decreases from the portion B to a portion C, which is 0.6 mm deep from the outer surface. The hardness at the portion C is about 200 Hv that is approximately the same as the hardness of the unheated member. The hardness from the portion C to a portion D in the inner surface is approximately the same as the hardness of the unheated member. The hardness distributions of the peripheral wall in the thickness direction are set as described above by irradiation of laser light.

The residual stress of the outer surface of the peripheral wall of the heated portion is compression of about 70 MPa. The residual stress of the inner surface is tension of about 5 MPa. The residual stress of the peripheral wall of the heated portion is significantly reduced from the residual stress of the peripheral wall of the unheated member by irradiation of laser light.

Now, how the torsion beam 1 is formed will be described. First, a mother pipe is prepared, and the recessed portion 10 is formed using a mold (not shown). After that, the torsion beam 1 is partially irradiated with laser light to the hatched areas shown in FIG. 2 and FIG. 3 to perform a partial heat treatment. The energy density of the laser light at this moment is determined to make the hardness distributions of the peripheral wall in the thickness direction such that the hardness of an outer portion in a predetermined area is greater than the hardness of the outer portion before heating and greater than the hardness of an inner portion of the peripheral wall, as indicated by the white dots in FIG. 5, and such that the residual stress of the inner portion of the peripheral wall is less than the residual stress of the unheated member.

The results of durability tests of the torsion beam 1 obtained in the manner as described above will be explained in comparison with another torsion beam, based on FIG. 5.

The durability was tested by a method in which both front end portions of the two arms 2 are fixed, and a downward force is applied to a rear end portion of one of the two arms 2 to cause downward deformation, whereas an upward force is applied to a rear end portion of the other arm 2 to cause upward deformation, and thereafter, the two arms are deformed by applying forces opposite to the forces which have been applied. This is counted as one test, which is repeatedly performed and stopped when a crack is formed in any part of the torsion beam 1.

The prepared torsion beams include a torsion beam of the present invention to which a partial heat treatment has been performed (the present invention), a torsion beam not subjected to heat treatment (comparative example 1), a torsion beam the entire part of which is quenched to have Vickers hardness of 400 Hv (comparative example 2), and a torsion beam the entire part of which is quenched to have Vickers hardness of 500 Hv (comparative example 3).

The comparative example 1 is not subjected to heat treatment. Thus, the hardness of the peripheral wall of the torsion beam from an outer surface portion to an inner surface portion is about 210 to 250 Hv, similar to the hardness of the peripheral wall of the unheated member of the torsion beam 1 according to the present invention. Further, the residual stress of the outer surface portion of the peripheral wall of the comparative example 1 is compression of about 300 MPa, and the residual stress of the inner surface portion is tension of about 400 MPa.

In the comparative example 1, a crack was formed in the inner surface portion of the peripheral wall when the tests were repeated 0.3 million times.

In the comparative example 2, the hardness of an outer surface portion of the peripheral wall of the torsion beam is about 280 Hv, and the hardness is about 400 Hv around a portion S which is 0.5 mm from the outer surface portion. The hardness from the portion S to the inner surface is about 400 to 420 Hv. The residual stress of the outer surface portion of the peripheral wall of the comparative example 2 is compression of about 200 MPa, and the residual stress of the inner surface portion is tension of about 300 MPa. In the comparative example 2 in which the entire torsion beam has been quenched, a tensile residual stress is generated in the inner surface portion because a cooling rate on the inner surface side is lower than a cooling rate on the outer surface side.

In the comparative example 2, a crack was formed in the inner surface portion of the peripheral wall when the tests were repeated 0.4 million times.

In the comparative example 3, the hardness of an outer surface portion of the peripheral wall of the torsion beam is about 380 Hv, and the hardness is about 500 Hv around a portion T which is 1.5 mm from the outer surface portion. The hardness from the portion T to the inner surface portion is about 500 to 510 Hv. The residual stress of the outer surface portion of the peripheral wall of the comparative example 3 is compression of about 300 MPa, and the residual stress of the inner surface portion is tension of about 200 MPa.

In the comparative example 3, a crack was formed in the inner surface portion of the peripheral wall when the tests were repeated 1.15 million times. In the comparative example 3, durability is improved compared to the comparative examples 1 and 2. However, if the entire torsion beam 1 has the hardness of about 500 Hv, toughness is decreased, and in the event that a moving vehicle is hit on the torsion beam 1 by an obstacle, the torsion beam 1 may be easily damaged by the impact. Therefore, the torsion beam 1 may not be practically used.

In contrast to the torsion beams of the comparative examples 1-3, durability tests of the torsion beam 1 of the present invention showed that no crack was formed even after the tests were repeated over 1.6 million times.

In other words, the torsion beam 1 can have more than four times the durability of the torsion beams of the comparative examples 1 and 2 by just performing a partial heat treatment in such a manner that makes the hardness of an outer portion of the torsion beam 1 in a predetermined area greater than the hardness of the outer portion before heating and greater than the hardness of an inner portion of the peripheral wall, and that makes the residual stress of the inner portion of the peripheral wall is less than the residual stress of the unheated member.

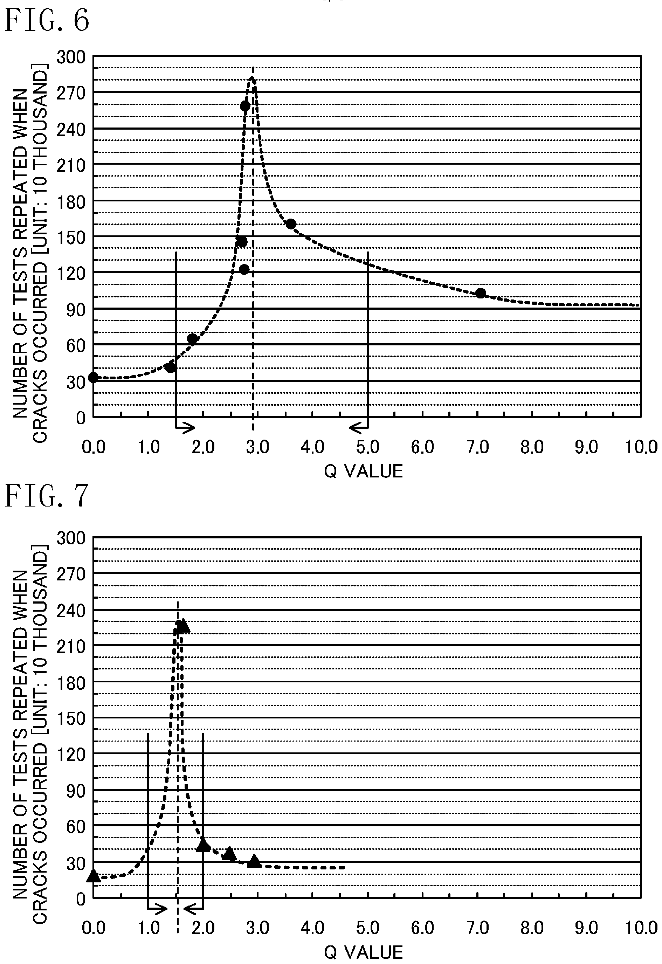

Now, an optimum energy density of laser light emitted in the partial heat treatment will be explained based on FIG. 6. In the graph of FIG. 6, the horizontal axis indicates Q values, and the vertical axis indicates the number of tests repeated when cracks occurred. The "Q values" as used in the present specification are obtained by dividing a laser output by a scanning speed.

Circles in the graph indicate the number of tests repeated when cracks occurred, in the case where a partial heat treatment is performed by laser light emission to obtain the indicated Q value. If the Q value is 1.5 or more, the durability significantly increases by more than 30 percent, compared to the comparative example 1, which is an unheated member (Q value=0, the number of tests repeated when cracks occurred = 0.3 million times). If the Q value is 2.8 or more and 3.1 or less, the durability increases further more. As to an upper limit of the Q value, the outer surface portion of the peripheral wall is severely melted and the torsion beam 1 will be a defective if the Q value is 6.0 or more. Thus, the Q value is preferably less than 6.0, and more preferably 5.0.

By emitting laser light such that the Q value will be 1.5 or more and 5.0 or less as described above, it is possible to obtain the hardness distributions of the present invention shown in FIG. 5 and reduce the residual stress. It is therefore preferable that the Q value is 1.5 or more and 5.0 or less, and more preferably, 2.8 or more and 3.1 or less. Particularly when the Q value is set to around 3.0, the number of tests repeated when cracks occurred is nearly 3 million times, which means that effects of the partial heat treatment are further significant.

In the partial heat treatment, only part of the torsion beam 1 is irradiated with the laser light. Thus, less energy is consumed and less manpower is needed, compared to the case of quenching the entire part.

As explained above, in the present embodiment, a partial heat treatment is performed on the peripheral wall of the torsion beam 1, thereby making the hardness of an outer portion of the peripheral wall greater than the hardness of the outer portion before heating and greater than the hardness of an inner portion of the peripheral wall, and reducing the residual stress of the inner portion of the peripheral wall. As a result, the occurrence of cracks, etc., can be reduced even when torsion is repeatedly applied to the torsion beam 1, and the torsion beam is highly durable without increasing the thickness of the peripheral wall, and without quenching the entire part of the torsion beam.

As shown in FIG. 5, the hardness of the inner portion of the peripheral wall of the torsion beam 1 is approximately the same as the hardness of the inner portion before heating. Thus, the torsion beam 1 is highly durable, while having appropriate toughness and strength against impact.

The thickness of the area where the hardness is increased in the peripheral wall of the torsion beam 1 is half or less of the total thickness of the peripheral wall. Thus, the toughness of the torsion beam 1 is sufficient, and the durability can be further increased. Preferably, the thickness of the area where the hardness is increased in the peripheral wall of the torsion beam 1 is one third or less of the total thickness of the peripheral wall.

The partial heat treatment is performed by emitting laser light. Thus, the highly durable torsion beam 1 can be formed with less energy.

Effects of the heat treatment using the laser light are sufficient even if the plate thickness of the torsion beam 1 is changed.

For example, as shown in FIG. 7, the durability is significantly increased also in the case where the steel pipe which forms the torsion beam 1 has a plate thickness of 2.3 mm, by performing heat treatment on the same area as in the torsion beam 1 having a plate thickness of 2.9 mm, using laser light.

Specifically, in the case where the plate thickness is 2.3 mm, the number of tests repeated when cracks occurred is increased in a region where an optimum energy density of the laser light is low, compared to the case where the plate thickness is 2.9 mm, because the plate thickness is thinner. If the Q value is 1.0 or more and 2.0 or less, the durability significantly increases by more than 30 percent, compared to an unheated member (Q value=0, the number of tests repeated when cracks occurred = 0.2 million times). If the Q value is 1.3 or more and 1.7 or less, the durability increases further more. As to an upper limit of the Q value, the outer surface portion of the peripheral wall is severely melted and the torsion beam 1 will be a defective if the Q value is 4.0 or more. Thus, the Q value is preferably less than 4.0, and more preferably 3.0.

In the above embodiment, the present invention is applied to a vehicle's torsion beam 1, but the present invention is not limited to the vehicle's torsion beam 1, and may also be applied to a torsion spring, a stabilizer bar, and any torsion beams other than vehicle's parts to which torsion is repeatedly applied.

### INDUSTRIAL APPLICABILITY

As described above, a torsion beam and a method for forming the torsion beam according to the present invention is applicable to parts of a suspension of a vehicle, for example.

### DESCRIPTION OF REFERENCE CHARACTERS

1 torsion beam
2 arm
3 bush
4 wheel support member
5 spring support
10 recessed portion

## Claims

1. A partially heat-treated torsion beam used for a suspension of a vehicle, the torsion beam comprising a peripheral wall,
wherein an outer portion of the peripheral wall of the partially heat-treated torsion beam has an hardness which is larger than the hardness of an inner portion of the peripheral wall,
**characterized in that**
a thickness of the outer portion of the peripheral wall, in which the hardness is increased compared to the hardness of the inner portion, is half or less of a total thickness of the peripheral wall.

2. The hollow member of claim 1, wherein
the hardness of the inner portion of the peripheral wall is approximately the same as the hardness of the inner portion before heating.

3. A method for forming a torsion beam used for a suspension of a vehicle,
wherein a partial heat treatment is performed on part of a peripheral wall of the torsion beam to make hardness of an outer portion of the peripheral wall greater than hardness of the outer portion before heating and greater than hardness of an inner portion of the peripheral wall, and to reduce a residual stress of the inner portion of the peripheral wall.

4. The method of claim 3,
wherein the partial heat treatment is performed by emitting laser light from outside the peripheral wall of the torsion beam.

## Patentansprüche

1. Teilweise wärmebehandelter Torsionsträger, der für eine Aufhängung eines Fahrzeugs verwendet wird,
wobei der Torsionsträger eine Umfangswand umfasst,
wobei ein Außenabschnitt der Umfangswand des teilweise wärmebehandelten Torsionsträgers eine Härte aufweist, die größer ist als die Härte eines Innenabschnitts der Umfangswand,
**dadurch gekennzeichnet, dass**
eine Dicke des Außenabschnitts der Umfangswand, in welchem die Härte verglichen zur Härte des Innenabschnitts erhöht ist, die Hälfte oder weniger von einer Gesamtdicke der Umfangswand beträgt.

2. Hohlkörper nach Anspruch 1, wobei
die Härte des Innenabschnitts der Umfangswand in etwa die gleiche ist wie die Härte des Innenabschnitts vor dem Erwärmen.

3. Verfahren zum Bilden eines Torsionsträgers, der für eine Aufhängung eines Fahrzeugs verwendet wird, wobei eine teilweise Wärmebehandlung an einem Teil einer Umfangswand des Torsionsträgers durchgeführt wird, um die Härte eines Außenabschnitts der Umfangswand größer als die Härte des Außenabschnitts vor dem Erwärmen, und größer als die Härte eines Innenabschnitts der Umfangswand zu machen, und um eine Restspannung des Innenabschnitts der Umfangswand zu verringern.

4. Verfahren nach Anspruch 3,
wobei die teilweise Wärmebehandlung durch Emittieren von Laserlicht von außerhalb der Umfangswand des Torsionsträgers durchgeführt wird.

## Revendications

1. Poutre de torsion en partie traitée à chaud pour une suspension d'un véhicule, la poutre de torsion comprenant une paroi périphérique,
dans laquelle une partie externe de la paroi périphérique de la poutre de torsion en partie traitée à chaud a une dureté qui est supérieure à la dureté d'une partie interne de la paroi périphérique,
**caractérisée en ce que** :
une épaisseur de la partie externe de la paroi périphérique, dans laquelle la dureté est accrue en comparaison de la dureté de la partie interne, est la moitié ou moins de l'épaisseur totale de la paroi périphérique.

2. Elément creux selon la revendication 1, dans lequel :
la dureté de la partie interne de la paroi périphérique est approximativement la même que la dureté de la partie interne avant chauffage.

3. Procédé de formation d'une poutre de torsion utilisée pour une suspension d'un véhicule, dans lequel un traitement partiel à chaud est effectué sur une partie d'une paroi périphérique de la poutre de torsion pour faire en sorte que la dureté d'une partie externe de la paroi périphérique soit supérieure à la dureté de la partie externe avant chauffage et supérieure à la dureté de la partie interne de la paroi périphérique et pour réduire une contrainte résiduelle de la partie interne de la paroi périphérique.

4. Procédé selon la revendication 3,
dans lequel le traitement partiel à chaud est effectué en émettant de la lumière laser de l'extérieur de la paroi périphérique de la poutre de torsion.
